# EUROPEAN PATENT SPECIFICATION

(11) **EP 2 364 432 B1**
(45) Date of publication and mention of the grant of the patent: **20.04.2016**
(21) Application number: 09748656.7
(22) Date of filing: 03.11.2009
(51) Int. Cl.: G01C 21/34, G08G 1/0968

(54) **NAVIGATION SYSTEM HAVING DYNAMIC ADAPTIVE ROUTING AND METHOD OF OPERATION THEREOF**
NAVIGATIONSSYSTEM MIT DYNAMISCHEM ADAPTIVEM ROUTING UND BETRIEBSVERFAHREN DAFÜR
SYSTÈME DE NAVIGATION POSSÉDANT UN ROUTAGE ADAPTATIF DYNAMIQUE ET SON PROCÉDÉ DE FONCTIONNEMENT

(30) Priority: 05.11.2008 US 265659
(43) Date of publication of application: 14.09.2011
(73) Proprietor: TeleNav, Inc., Sunnyvale, CA 94086 (US)
(72) Inventor: CHAO, Yi-Chung, San Jose California 95129 (US); RENNARD, Robert, Gilroy California 95020 (US)
(74) Representative: Liesegang, Eva
(86) International application number: PCT/US2009/063175
(87) International publication number: WO 2010/053927

(56) References cited:
- EP-A1- 1 635 144
- EP-A1- 1 830 161
- EP-A2- 0 703 436
- EP-A2- 1 530 025
- WO-A1-2007/032278
- WO-A1-2008/004857
- US-A1- 2007 299 599
- US-A1- 2008 004 802

## Description

### TECHNICAL FIELD

The present invention relates generally to a navigation system, and more particularly to a navigation system having dynamic adaptive routing.

### BACKGROUND ART

Modem portable consumer and industrial electronics, especially client devices such as navigation systems, cellular phones, portable digital assistants, and combination devices, are providing increasing levels of functionality to support modem life including location-based information services. Numerous technologies have been developed to utilize this new functionality. Some of the research and development strategies focus on new technologies while others focus on improving the existing and mature technologies. Research and development in the existing technologies can take a myriad of different directions.

As users become more empowered with the growth of mobile location based service devices, new and old paradigms begin to take advantage of this new device space. There are many technological solutions to take advantage of this new device location opportunity. One existing approach is to process location information to provide navigation services such as a global positioning service (GPS) navigation system for a car or on a mobile device such as a cell-phone or personal digital assistant (PDA).

However, the ability for users to process location information to generate a navigation route does not automatically translate to providing a safe and effective method of navigation for each individual. An effective means to make navigation systems more useful to individuals is still required.

For example, some individual drivers are relatively inexperienced and can require a higher level of interactivity and support than other more typical or advanced drivers. Drivers in hazardous weather or adverse conditions can require navigation instructions suitable for the situation.

Thus, a need remains for a navigation system having dynamic adaptive routing to efficiently create, manage, and present dynamic adaptive navigation information in a timely fashion for a variety of circumstances and situations. In view of the ever-increasing added features desired by consumers in their mobile client devices, it is more and more critical that answers be found to these problems.

WO 2008/004857 A1 describes a navigation device wherein navigation instructions are adapted to the driver preferences. The driving behaviour of the driver is recorded. Traffic, weather and time information may be combined with information on the driving behaviours. This information is examined and used to build up a driver profile. This driver profile is used to adapt future navigation instructions for making the navigation device a more personal-fit navigation aid and giving the right instructions to a specific driver.

EP 1 635 144 A1 describes a navigation system wherein different routes are calculated for different drivers, in response to their driving behaviour and preferences.

EP 1 530 025 A2 describes a navigation system which is capable of learning user habits and preferences, mistakes in a digital map database, and new roads that may have been added after release of the digital map database.

WO2007/032278A1 relates to a route searching device for a vehicle which detects the driver behavior for calculating a route to a destination. In this respect, the detected behavior of the driver can relate to the skill of the driver to operate the vehicle and is used in the route calculation in conjunction with additional information. Such additional information can for example include the age, gender and physical condition of the driver, his eye-movements, car window settings and car seat pressure distribution profiles. Hence, information including the driver behavior is combined and used for calculating a route having suitable road and traffic conditions, width, curves and altitude changes.

Solutions to these problems have been long sought but prior developments have not taught or suggested any solutions and, thus, solutions to these problems have long eluded those skilled in the art.

### DISCLOSURE OF THE INVENTION

The present invention provides a method of operating a navigation system according to claim 1 and a navigation system according to claim 9. Preferred embodiments of the invention are defined in the dependent claims.

The present invention provides a method of operation of a navigation system having dynamic adaptive routing including detecting a navigation event; updating a driver profile with the navigation event; calculating a navigation routing parameter with the driver profile; and sending the navigation routing parameter for displaying on a multimedia display interface of a device.

The present invention provides a navigation system having dynamic adaptive routing including a location unit for detecting the navigation event; a profile engine, coupled to the location unit, for updating a driver profile with the navigation event; a routing engine, couple to the profile engine, for calculating a navigation routing parameter with the driver profile; and a communication unit, coupled to the profile engine, for sending the navigation routing parameter for displaying on a multimedia display interface on a device.

The aspects can become apparent to those skilled in the art from a reading of the following detailed description when taken with reference to the accompanying drawings.

### BRIEF DESCRIPTION OF THE DRAWINGS

FIG. 1 illustrates a navigation system having dynamic adaptive routing in a first embodiment of the present invention.
FIG. 2 is a block diagram of the first embodiment of the navigation system of FIG. 1.
FIG. 3 is a diagram of the data structures in the memory of the navigation system of FIG. 1.
FIG. 4 is a flowchart for operating the navigation system of FIG. 1.
FIG. 5 illustrates a navigation system having dynamic adaptive routing in a second embodiment of the present invention.
FIG. 6 is a block diagram of the navigation system of FIG. 5.
FIGs. 7A and 7B are diagrams of the data structures in the memories of the navigation system of FIG. 5.
FIGs. 8A, 8B, and 8C are parts of a flowchart for operating the navigation system of FIG. 5.
FIGs. 9A, 9B, 9C and 9D are illustrations of a first example of a dynamic adaptive navigation routing by the device of the navigation system of FIG. 1.
FIG. 10 is an illustration of a second example of a dynamic routing of the navigation system of FIG. 1.
FIG. 11 is an illustration of a first example of a dynamic adaptive routing of the navigation system of FIG. 5.
FIG. 12 is a flow chart of a method of operation of a navigation system having dynamic adaptive routing in a further embodiment of the present invention.

### BEST MODE FOR CARRYING OUT THE INVENTION

The following embodiments are described in sufficient detail to enable those skilled in the art to make and use the invention. It is to be understood that other embodiments would be evident based on the present disclosure, and that system, process, or mechanical changes can be made without departing from the scope of the present invention.

In the following description, numerous specific details are given to provide a thorough understanding of the invention. However, it can be apparent that the invention can be practiced without these specific details. In order to avoid obscuring the present invention, some well-known circuits, system configurations, and process locations are not disclosed in detail.

Likewise, the drawings showing embodiments of the system are semi-diagrammatic and not to scale and, particularly, some of the dimensions are for the clarity of presentation and are shown greatly exaggerated in the drawing FIGs.

One skilled in the art would appreciate that the format with which navigation information is expressed is not critical to some embodiments of the invention. For example, in some embodiments, navigation information is presented in the format of (x, y), where x and y are two ordinates that define the geographic location, i.e., a position of a user. In an alternative embodiment, navigation information is presented by longitude and latitude related information. In a further embodiment of the present invention, the navigation information also includes a velocity element including a speed component and a heading component.

The term "relevant information" referred to herein is defined as the navigation information described as well as information relating to points of interest to the user, such as local business, hours of businesses, types of businesses, advertised specials, traffic information, maps, local events, and nearby community or personal information.

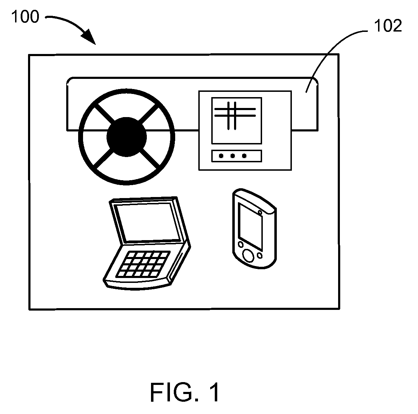

Referring now to FIG. 1, therein is illustrated a navigation system 100 having dynamic adaptive routing in a first embodiment of the present invention. The navigation system 100 is dynamic because it can respond to real-time navigation events. The navigation system 100 is adaptive because it can change behavior and create a new routing based on the type of navigation events that occur.

The navigation system 100 can provide both a routing function and present visual and audio navigation information. A device 102 can be a stand alone mobile navigation device that can provide location-based navigation information.

For example, the device 102 can be of any of a variety of mobile navigation devices, such as a vehicle navigation unit, a handheld navigation unit, a personal digital assistant, a notebook computer, or other multi-functional mobile communication devices having means for location monitoring, preferably, global positioning system (GPS) function, of the device 102.

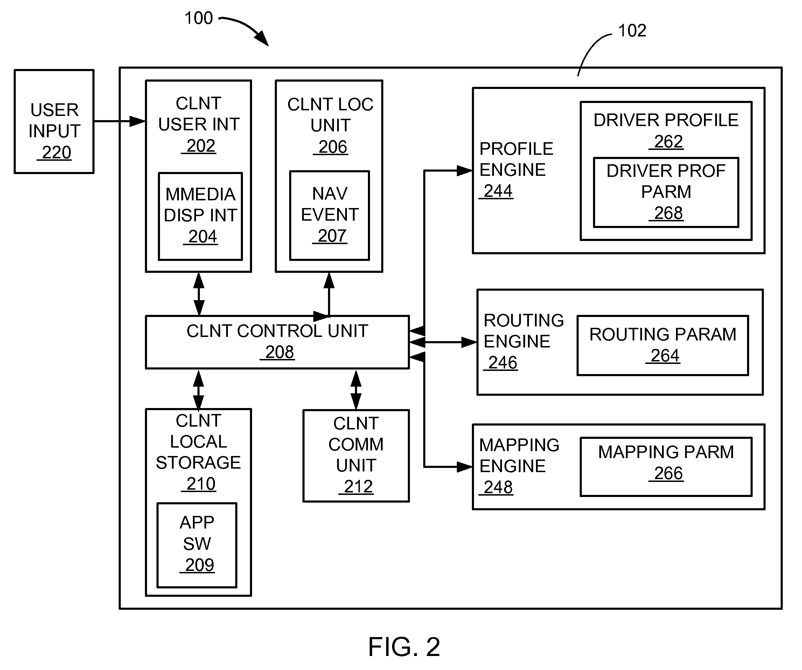

Referring now to FIG. 2, therein is shown a block diagram of the first embodiment of the navigation system 100 having dynamic adaptive routing of FIG. 1. FIG. 2 shows a single device embodiment of the navigation system 100 having dynamic adaptive routing where the device 102 can include components necessary to perform dynamic adaptive navigation routing.

The device 102, for example, can include a client user interface 202 having a multimedia display interface 204, a client location unit 206, such as a GPS unit, a client control unit 208, such as a processor, a software 209, a client local storage 210, a client communication unit 212, a profile engine 244, a routing engine 246, and a mapping engine 248.

For illustrative purposes, the navigation system 100 is shown with the device 102 encompassing the functionality in a single unit, although it is understood that any individual functional block can be implemented either locally or remotely on a different device. For example, the routing engine 246 of the device 102 can be implemented as a remote process on another device.

A user input 220 can to provide command and data inputs to the client user interface 202. The client user interface 202 can include the multimedia display interface 204, a key pad, a touchpad, soft-keys, a keyboard, a microphone, or any combination thereof, to provide data and command inputs to the device 102.

The multimedia display interface 204 can present visual and audio information such as maps, text, video, images, audio commands, audio notifications, audio warning, or any combination thereof. The multimedia display interface 204 can include a flat panel display, projector, cathode-ray tube display, heads up display, speakers, headphones, buzzers, or any combination thereof.

Presenting visual information on the multimedia display interface 204 can include displaying images, graphics, video, text or any combination thereof on the screen or display of the multimedia display interface 204. Presenting audio information on the multimedia display interface 204 can include playing voice, music, audio clips or any combination thereof on the speakers, headphones or buzzers of the multimedia display interface 204.

The client location unit 206 can provide location information and be implemented in many ways. For example, the client location unit 206 can be a global positioning system (GPS), inertial navigation system, cell-tower location system, accelerometer location system, or any combination thereof. The client location unit 206 can include the active and passive components, such as microelectronics or an antenna.

The client location unit 206 can detect a navigation event 207, representing a deviation from a routing command. The navigation event 207 can also include location change, speed change, vehicle control usage, vehicle control setting change, vehicle instrument change, or any combination thereof.

The client control unit 208 can execute the software 209 and can provide the intelligence of the device 102 for interaction with the client user interface 202, the multimedia display interface 204, the client location unit 206, the client local storage 210, the client communication unit 212, the profile engine 244, the routing engine 246 and the mapping engine 248. The client control unit 208 can also execute the software 209 for other functions pertinent to a navigation device.

The client local storage 210 can be implemented as a volatile memory, a nonvolatile memory, an internal memory, an external memory, or a combination thereof. For example, the client local storage 210 can be a nonvolatile storage such as non-volatile random access memory (NVRAM), Flash memory, or disk storage. The client local storage 210 can be a volatile storage such as static random access memory (SRAM).

The client local storage 210 can store the software 209, setup data, multimedia data, photos, text, sounds recordings, video and other data for the operation of the device 102 as a navigation device. The client local storage 210 can also store the relevant information, such as maps, route information, traffic information, advertisement and point of interest (POI), navigation routing entries, driver information, or any combination thereof. The client local storage 210 can also store recorded, imaged, sampled or created relevant information.

The client communication unit 212 can allows the device 102 to communicate with other devices not shown in this figure. The client communication unit 212 can include active and passive components, such as microelectronics or an antenna.

The profile engine 244 can create, store, update, and retrieve a driver profile 262. The profile engine 244 can be implemented as an integrated hardware component of the device 102 or as a distinct separate hardware, software, or combination system that provides access to the driver profile information. For example, the profile engine 244 can be implemented as a software module that accesses driver profile information stored in the client local storage 210.

The driver profile 262 can represent learning by the profile engine 244 of the behavior, tendencies, and history of a driver. The driver profile 262 can include any number of parameters, such as a driver proficiency parameter 268, a driver location history, a driver vehicle history, a driver traffic parameter, a driver environmental history, a driver preferences parameter, or any combination thereof.

The driver proficiency parameter 268 can describe the skill level of the driver. The driver proficiency parameter 268 can be implemented as an enumerated value, such as beginner, normal, advanced, or expert; a data structure with several individual skill elements, such as left turn preference, freeway preference, traffic preference, or weather preference; or a numerical rating; or any combination thereof.

The routing engine 246 can create, store, update and retrieve a route parameter 264 using the driver profile 262. The routing engine 246 can process the driver profile 262 to model driver behavior and calculate the route parameter 264 based on the driver profile 262.

The routing engine 246 can be implemented as a hardware, software or combination component. For example, the routing engine 246 can be implemented as software running on the client control unit 208 accessing the driver profile 262 stored in the client local storage 210.

The route parameter 264 describes the route between two or more locations. The route parameter 264 can include a primary route, non-primary routes, vector maps, node and edge weighing information, navigation commands, or any combination thereof.

The mapping engine 248 can create, store, update and retrieve a mapping parameter 266 for the route parameter 264. The mapping engine 248 can be implemented as a hardware, software, or combination component. For example, the mapping engine 248 can be implemented as software running on the client control unit 208 accessing a mapping database stored in the client local storage 210.

The mapping parameter 266 can represent the geographical and navigational features along a route. The mapping parameter 266 can include location-specific mapping information, graphical display information, resolution and size-specific display tiles, vector maps, images, points of interest, or any combination thereof.

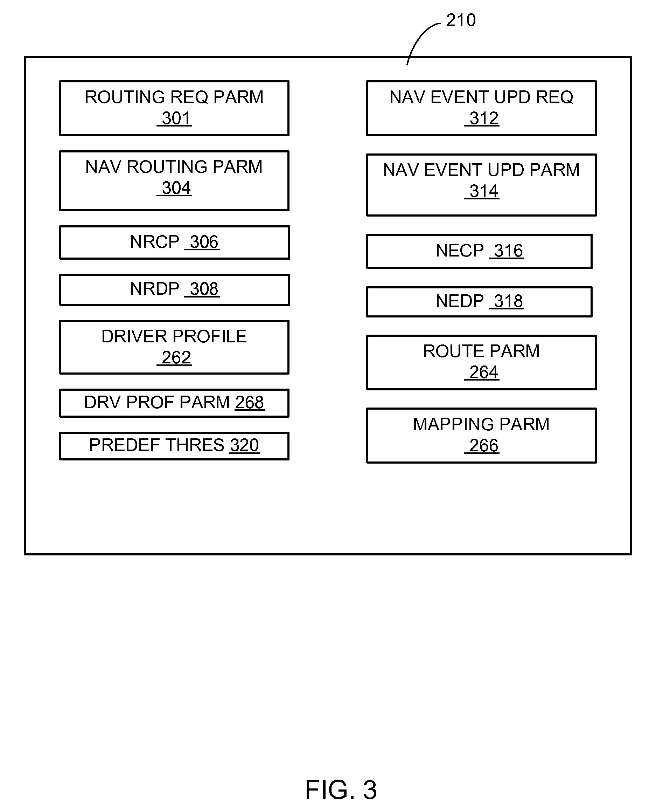

Referring now to FIG. 3, therein is shown a diagram of the data structures in the memory of the navigation system of FIG. 1. The data parameters in the client local storage 210 can include the driver profile 262, the route parameter 264, and the mapping parameter 266. The client local storage 210 can also include a routing request parameter 301, a navigation routing parameter 304, a navigation event update request 312, and a navigation event update parameter 314.

The routing request parameter 301 can be used to request a new routing. The routing request parameter 301 can include start and end locations, waypoint locations, driver identification (ID), account ID, control parameters, or any combination thereof.

The navigation routing parameter 304 can be used to operate the multimedia display interface 204 of FIG. 2 of the client user interface 202 of FIG. 2. The navigation routing parameter 304 can include a navigation routing control parameter 306 and a navigation routing data parameter 308.

The navigation routing control parameter 306 can include operating mode parameters to control the multimedia display interface 204. For example, the multimedia display interface 204 can provide turn warning distances, lane change warning distances, local navigation preferences, audio warning parameters, accessibility parameters, or any combination thereof.

The navigation routing data parameter 308 can include visual and audio information to present on the multimedia display interface 204 of the client user interface 202. The navigation routing data parameter 308 can include the driver profile 262, the route parameter 264, the mapping parameter 266, driver ID, system ID, account ID, device type, location, date, time, multimedia data, or any combination thereof.

The navigation event update request 312 can request an updated routing. The navigation event update request 312 can include start and end locations, waypoint locations, driver identification (ID), account ID, control parameters, or any combination thereof.

The navigation event update parameter 314 can be used to update the multimedia display interface 204. The navigation event update parameter 314 can include a navigation event control parameter 316 and a navigation event data parameter 318. The navigation event control parameter 316 can include operating mode parameters to control the multimedia display interface 204. The navigation event data parameter 318 can include visual and audio information to be presented on the multimedia display interface 204.

The driver profile 262 can include a predefined threshold 320. The driver proficiency parameter 268 can update the driver profile 262 based on crossing the predefined threshold 320. The predefined threshold 320, as an example, can be defined as the number of instances of the navigation event 207 of FIG. 2, the time between the occurrences of the navigation event 207, the distance between the occurrences of the navigation event 207, or a combination thereof.

The predefined threshold 320 can be set to a fixed value or can having variable value. For example, the predefined threshold 320 can vary depending on the type of the navigation event 207. As another example, the predefined threshold 320 may be adjusted based on the updating of the driver profile 262.

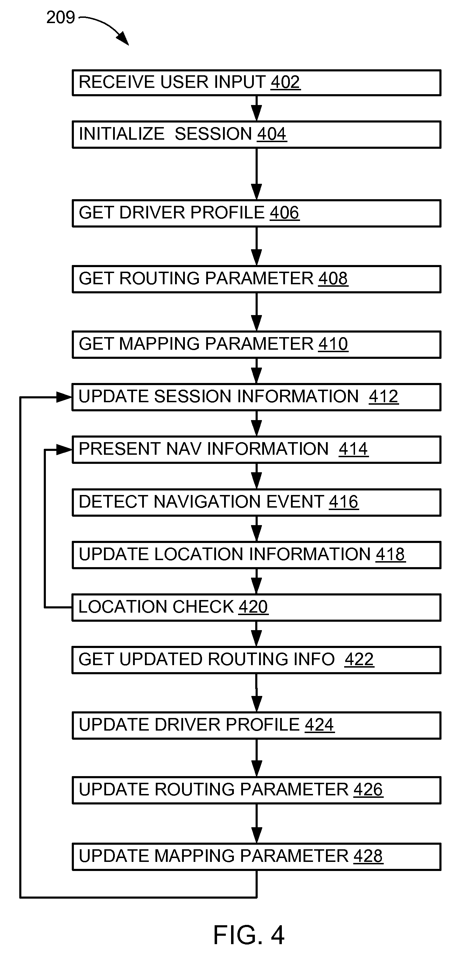

Referring now to FIG. 4, therein is shown a flow chart for operating the navigation system 100 of FIG. 1. The flow chart can be included in the software 209 of FIG. 2. The client control unit 208 of FIG. 2 can execute the software 209.

The navigation system 100 can calculate a customized route for a particular driver to a target location and operate the multimedia display interface 204 of FIG. 2 of the device 102 of FIG. 2. The navigation system 100 can provide customization by presenting navigation routing directions and mapping information. In the flow chart example, each block is indicated by a number and successively higher block numbers follow one another unless explicitly indicated.

The device 102 can receive an navigation routing request to a target location with the user input 220 of FIG. 2 to the client user interface 202 of FIG. 2 in a receive user input block 402. The device 102 can process the user input 220 to create the routing request parameter 301 of FIG. 3.

Next, the device 102 can initialize a navigation session in an initialize session block 404. The device 102 can process the routing request parameter 301 to calculate the navigation routing parameter 304 of FIG. 3 including the navigation routing control parameter 306 of FIG. 3, and the navigation routing data parameter 308 of FIG. 3.

Next, using the driver ID in the routing request parameter 301, the device 102 can retrieve the driver profile 262 of FIG. 2 from the profile engine 244 of FIG. 2 in a get driver profile block 406. The device 102 can process the driver profile 262 to update the navigation routing parameter 304.

Next, the device 102 processes the driver profile 262 to calculate the route parameter 264 of FIG. 2 in the routing engine 246 of FIG. 2 in a get routing parameter block 408. The device 102 can process the route parameter 264 to update the navigation routing parameter 304.

The routing engine 246 processses the driver proficiency parameter 268 of FIG. 2 to calculate the appropriate route. If the driver proficiency parameter 268 is below the predefined threshold 320 of FIG. 3, the routing engine 246 will calculate a simplified route with few difficult navigation maneuvers.

If the driver proficiency parameter 268 indicates an inexperienced driver, then the routing engine 246 can calculate a longer route using freeways and major streets, instead of a shorter route through minor roads and complicated shortcuts.

Next, using the route parameter 264, the device 102 can retrieve the mapping parameter 266 of FIG. 2 from the mapping engine 248 of FIG. 2 in a get mapping parameter block 410. The device 102 can process the mapping parameter 266 to update the navigation routing parameter 304 and the navigation routing data parameter 308.

Next, the device 102 can process the navigation routing parameter 304 and update the navigation session data in an update session information block 412. The navigation session data can include the session ID, the navigation routing parameter 304, or any combination thereof.

Next, the device 102 can present the navigation routing data parameter 308 on the multimedia display interface 204 of the client user interface 202 using the navigation routing control parameter 306 in a present navigation information block 414.

For example, the mapping parameter 266 can include display tiles which can be displayed on the multimedia display interface 204. In a further example, the route parameter 264 can include the primary route which can be used to generate audio commands on the multimedia display interface 204 to indicate when to make a turn.

Next, the device 102 can detect the navigation event 207 of FIG. 2 in the client location unit 206 of FIG. 2 in a detect navigation event block 416. If the navigation event 207 has not been detected by the client location unit 206, the device 102 can wait until the navigation event 207 occurs.

When the navigation event 207 is detected by the client location unit 206, the device 102 can update the current location parameter of the device 102 in an update location information block 418. The current location parameter is stored in the client local storage 210.

Next, the device 102 can process the current location parameter and determine if the device 102 is on the primary route of the route parameter 264 in a location check block 420. If the device 102 is on the primary route of the route parameter 264, then control can pass to the present navigation information block 414 to update the multimedia display interface 204. If the device 102 is not on the primary route of the route parameter 264, then the control can pass to a get updated routing information block 422.

The device 102 can process the navigation event 207 and the navigation routing parameter 304 to create the navigation event update parameter 314 of FIG. 3 in the get updated routing information block 422. The navigation event update parameter 314 can be stored in the client local storage 210 of the device 102.

Next, the profile engine 244 of the device 102 can update the driver profile 262 with the navigation event control parameter 316 of FIG. 3 in an update driver profile block 424. For example, if the navigation event 207 represents a missed left turn, the update to the driver profile 262 can include updating the driver proficiency parameter 268 of FIG. 2 to indicate an increased tendency to miss left turns.

Next, based on the driver profile 262 from the update driver profile block 424, the routing engine 246 of the device 102 can update the route parameter 264 in an update routing parameter block 426. The route parameter 264 can define the new route between the current location and the target destination based on the driver profile 262 having been updated. The navigation event update parameter 314 can be updated with the route parameter 264.

The routing engine 246 processes the driver proficiency parameter 268 of the driver profile 262 to calculate the route to the target location. If the driver proficiency parameter 268 indicates a history of missed turns above the predefined threshold 320 of FIG. 3, the routing engine 246 calculates a new route that avoids left hand turns.

Next, using the update to the route parameter 264, the device 102 can retrieve the mapping parameter 266 from the mapping engine 248 in an update mapping parameter block 428. The navigation event update parameter 314 can be updated with the mapping parameter 266. For example, the mapping parameter 266 can include updates of mapping images tiles for the new portions of the route identified in the route parameter 264.

When the navigation event update parameter 314 has been updated, control can pass to the update session information block 412. The device 102 can continue to process navigation event updates until the navigation session ends.

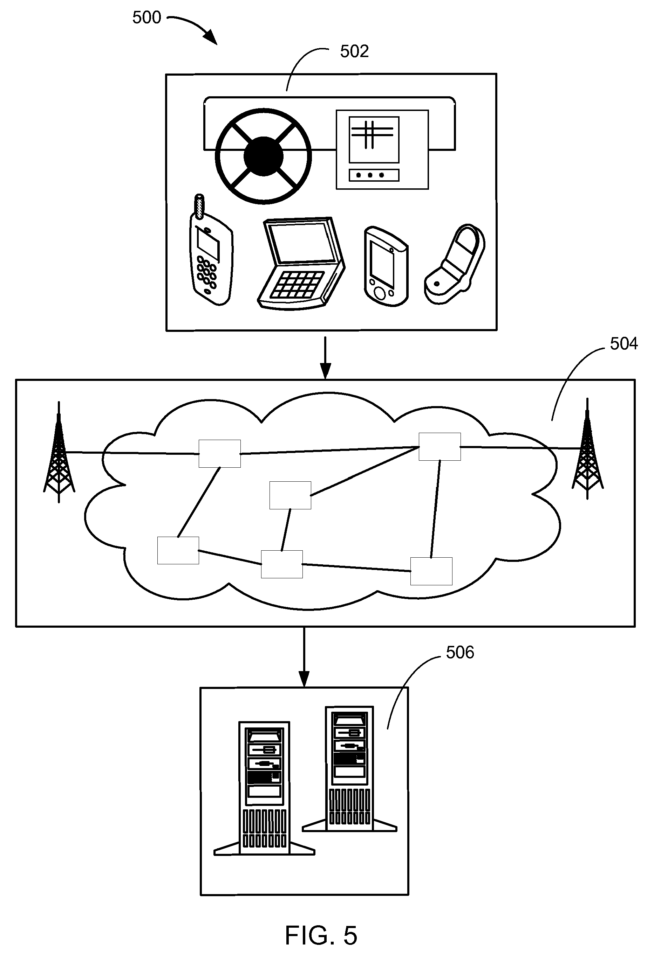

Referring now to FIG. 5, therein is illustrated a navigation system 500 having dynamic adaptive routing in a second embodiment of the present invention. The navigation system 500 is dynamic because it can respond to real-time navigation events. The navigation system 500 is adaptive because it can change behavior and create a new routing based on the type of navigation events that occur.

A first device 502, such as a client, is connected to a communication path 504, such as a wireless or wired network, to a second device 506, such as a server. For example, the first device 502 can be of any mobile device, such as a cellular phone, personal digital assistant, a notebook computer, or other multi-functional mobile communication or entertainment devices. The first device 502 includes means to couple to the communication path 504 to communicate with the second device 506 and means for location monitoring, such as global positioning system (GPS) function. The first device 502 can also be a server type device.

For illustrative purposes, the second device 506 is shown in a single location, although it is understood that the second device 506 can be centralized or decentralized and located at different locations. For example, the second device 506 can represent real or virtual servers in a single computer room, distributed across different rooms, distributed across different geographical locations, embedded within a telecommunications network, or virtualized servers within one or more other computer systems including grid or cloud type computing resources.

Also for illustrative purposes, the second device 506 can be any of a variety of centralized or decentralized computing devices including a computer, grid computing resources, a virtualized computer resource, cloud computing resource, routers, switches, peer-to-peer distributed computing devices, or a combination thereof, having means to couple with the communication path 504 to communicate with the first device 502. The second device 506 can also be a client type device as described for the first device 502.

Further for illustrative purposes, the navigation system 500 is shown with the second device 506 as a non-mobile computing device, although it is understood that the second device 506 can be different types of computing devices. For example, the second device 506 can also be a mobile computing device, such as notebook computer, another client device, or a different type of client device.

The communication path 504 can be a variety of networks. For example, the communication path 504 can include wireless communication, wired communication, optical, ultrasonic, or the combination thereof.

Satellite communication, cellular communication, Bluetooth, Infrared Data Association standard (IrDA), wireless fidelity (WiFi), and worldwide interoperability for microwave access (WiMAX) are examples of the wireless communication that can be included in the communication path 504. Ethernet, digital subscriber line (DSL), fiber to the home (FTTH), and plain old telephone service (POTS) are examples of the wired communication that can be included in the communication path 504.

The communication path 504 can traverse a number of network topologies and distances. For example, the communication path 504 can include personal area network (PAN), local area network (LAN), metropolitan area network (MAN), wide area network (WAN) or any combination thereof.

The navigation system 500 is shown with the second device 506 and the first device 502 as end points of the communication path 504, although it is understood that the navigation system 500 can have a different partition between the first device 502, the second device 506, and the communication path 504. For example, the first device 502, the second device 506, or a combination thereof can also function as part of the communication path 504.

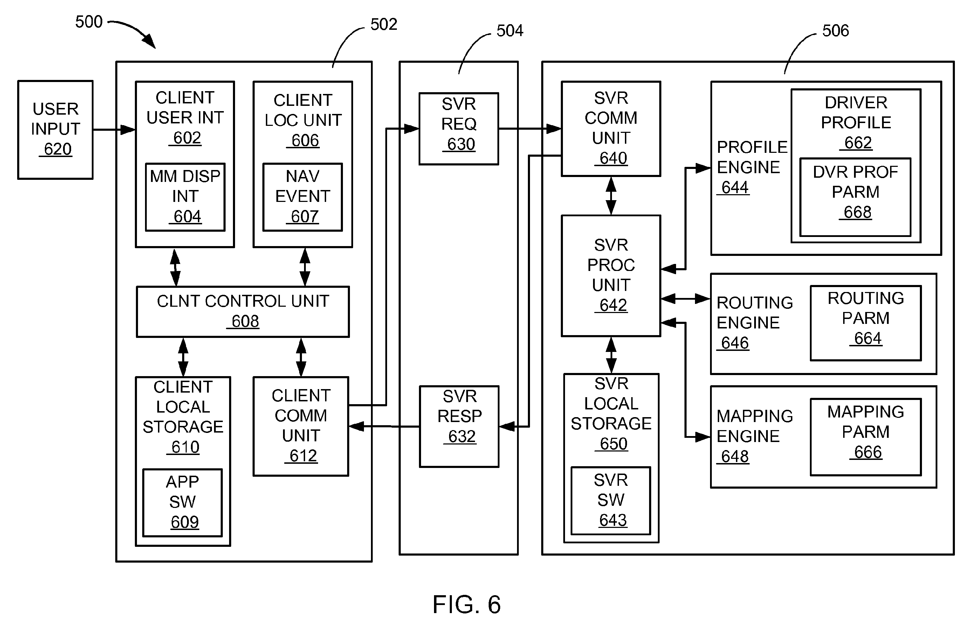

Referring now to FIG. 6, therein is shown a block diagram of the navigation system 500 of FIG. 5. FIG. 6 shows a multiple device embodiment where the first device 502 can communicate with the second device 506 over the communication path 504.

The first device 502, such as a client, can send a server request 630 to the second device 506 over the communication path 504. The second device 506, such as a server, can send a server response 632 to the first device 502 over the communication path 504.

For illustrative purposes, the navigation system 500 is shown with the first device 502 as a client, although it is understood that the navigation system 500 can have the first device 502 as a different type of device. For example, the first device 502 can be a server. For convenience to describe an example of the present invention, the first device 502 will be described as a client.

Also for illustrative purposes, the navigation system 500 is shown with the second device 506 as a server, although it is understood that the navigation system 500 can have the second device 506 as a different type of device. For example, the second device 506 can be a client. For convenience to describe an example of the present invention the second device 506 will be described as a server.

The first device 502 can include, for example, a client control unit 608, such as a processor, a software 609, a client local storage 610, a client communication unit 612, a client location unit 606, and a client user interface 602 having a multimedia display interface 604.

The client user interface 602 can be used to provide command and data inputs to the first device 502. The client user interface 602 can include the multimedia display interface 604, a key pad, a touchpad, soft-keys, a keyboard, a microphone, or any combination thereof, to provide data and command inputs to the first device 502.

The multimedia display interface 604 can present visual and audio information such as maps, text, video, images, audio commands, audio notifications, audio warning, or any combination thereof. The multimedia display interface 604 can include a flat panel display, projector, cathode-ray tube display, head's up display, speakers, headphones, or any combination thereof.

The client location unit 606 can provide location information of the first device 502 and can be implemented in many ways. For example, the client location unit 606 can be a global positioning system (GPS), inertial navigation system, cell-tower location system, accelerometer location system, or any combination thereof. The client location unit 606 can include the active and passive components, such as microelectronics or an antenna. The client location unit 606 can detect a navigation event 607.

The client local storage 610, such as a volatile memory, a nonvolatile memory, an internal memory, an external memory, or a combination thereof, For example, the client local storage 610 can be a nonvolatile storage such as non-volatile random access memory (NVRAM), Flash memory, or disk storage. The client local storage 610 can be a volatile storage such as static random access memory (SRAM).

The client control unit 608 can execute the software 609 and can provide the intelligence of the first device 502 for interaction with the second device 506, the client user interface 602, the multimedia display interface 604, the communication path 504 via the client communication unit 612, and interaction to the client location unit 606. The client control unit 608 can also execute the software 609 for other functions pertinent to a navigation device.

The client local storage 610 can store the software 609, setup data, multimedia data, photos, text, sounds recordings, video and other data for the operation of the first device 502 as a navigation device. The client local storage 610 can also store the relevant information, such as maps, route information, traffic information, advertisement and point of interest (POI), navigation routing entries, driver profiles, or any combination thereof, from the second device 506 or can be preloaded. The client local storage 610 can also store recorded, imaged, sampled or created relevant information to be transmitted to the second device 506.

The client communication unit 612 can couple with the communication path 504 to communicate with other devices including the second device 506. The client communication unit 612 can include active and passive components, such as microelectronics or an antenna, for interaction with the communication path 504.

The second device 506 can include a number of devices, for example, a server control unit 642 such as a processor or computer, a server software 643, a server local storage 650, a server communication unit 640, a profile engine 644, a routing engine 646, and a mapping engine 648.

For illustrative purposes, the navigation system 500 is shown with the second device 506 described with discrete functional blocks, although it is understood that the navigation system 500 can have the second device 506 in a different configuration. For example, the server control unit 642, the server communication unit 640, the profile engine 644, the routing engine 646, and the mapping engine 648 may not be discrete functional blocks but may have one or more of the aforementioned blocks combined into one functional block.

The server communication unit 640 can couple with the communication path 504 to communicate with other devices including the first device 502. The server communication unit 640 can include active and passive components, such as microelectronics or an antenna, for interaction with the communication path 504.

The server control unit 642 can execute the server software 643 and can provide the intelligence of the second device 506 for interaction with the first device 502, the profile engine 644, the routing engine 646, the mapping engine 648, the server communication unit 640, and the server local storage 650.

The profile engine 644 can create, store, update, and retrieve a driver profile 662. The driver profile 662 can include a driver proficiency parameter 668. The profile engine 644 can be implemented as a hardware or software component. For example, the profile engine 644 can be implemented as a dedicated hardware component or separate system than provides secure access to driver profile information.

The profile engine 644 can learn the driver tendencies and behaviors while operating the first device 502. The driver profile 662 can represent and store the learning by the profile engine 644.

The routing engine 646 can create, store, update and retrieve a route parameter 664 for a particular set of start and end locations. The profile engine 644 can be implemented as a hardware or software component. For example, the routing engine 646 can be implemented as software running on the server control unit 642 accessing routing information stored in the server local storage 650.

The mapping engine 648 can create, store, update and retrieve a mapping parameter 666 for the route parameter 664. The mapping engine can be implemented as a hardware or software component. For example, the mapping engine 648 can be implemented as software running on the server control unit 642 accessing a mapping database stored in the server local storage 650.

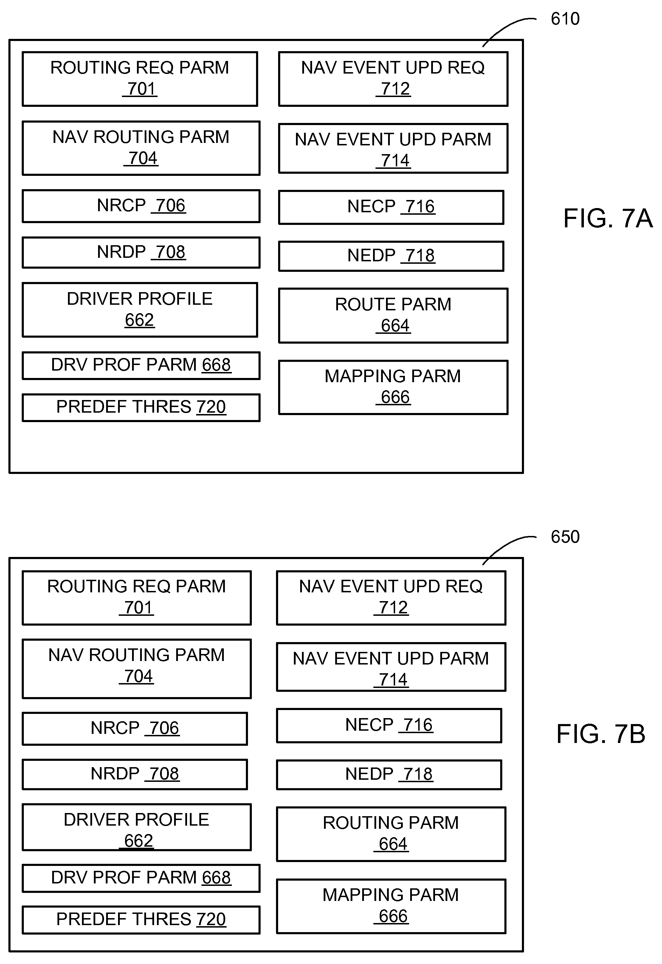

Referring now to FIGs. 7A and 7B, therein are shown diagrams of the data structures in the memories of the navigation system 500 of FIG. 5. Both the client local storage 610 of FIG. 7A and the server local storage 650 of FIG. 7B can include the same data parameters at different stages of operation of the navigation system 500.

The data parameters in the client local storage 610 can include the driver profile 662, the route parameter 664, and the mapping parameter 666. The driver profile 662 can include a predefined threshold 720. The driver proficiency parameter 668 can update the driver profile 662 based on crossing the predefined threshold 720. The predefined threshold 720, as an example, can be defined as the number of instances of the navigation event 607 of FIG. 6, the time between the occurrences of the navigation event 607, the distance between the occurrences of the navigation event 607, or a combination thereof.

The predefined threshold 720 can be set to a fixed value or can having variable value. For example, the predefined threshold 720 can vary depending on the type of the navigation event 607. As another example, the predefined threshold 720 may be adjusted based on the updating of the driver profile 662.

The client local storage 610 can also include a routing request parameter 701, a navigation routing parameter 704, a navigation event update request 712, and a navigation event update parameter 714.

The routing request parameter 701 can request a new route. The routing request parameter 701 can include start and end locations, waypoint locations, driver identification (ID), account ID, control parameters, or any combination thereof.

The navigation routing parameter 704 can be used to operate the multimedia display interface 604 of FIG. 6 of the client user interface 602 of FIG. 6. The navigation routing parameter 704 can include a navigation routing control parameter 706 and a navigation routing data parameter 708.

The navigation routing control parameter 706 can include operating mode parameters to control the multimedia display interface 604. For example, the multimedia display interface 604, based on the navigation routing control parameter 706, can provide turn warning distances, lane change warning distances, local navigation preferences, audio warning parameters, accessibility parameters, or any combination thereof.

The navigation routing data parameter 708 can include visual and audio information to be presented on the multimedia display interface 604 of the first device 502. The navigation routing data parameter 708 can include the driver profile 662, the route parameter 664, the mapping parameter 666, driver ID, system ID, account ID, device type, location, date, time, multimedia data, or any combination thereof.

The navigation event update request 712 can request a new routing. The navigation event update request 712 can include start and end locations, waypoint locations, driver identification (ID), account ID, control parameters, or any combination thereof.

The navigation event update parameter 714 can be used to operate the multimedia display interface 604. The navigation event update parameter 714 can include a navigation event control parameter 716 and a navigation event data parameter 718.

The navigation event control parameter 716 can include operating mode parameters to control the multimedia display interface 604. The navigation event data parameter 718 can include visual and audio information to be presented on the multimedia display interface 604.

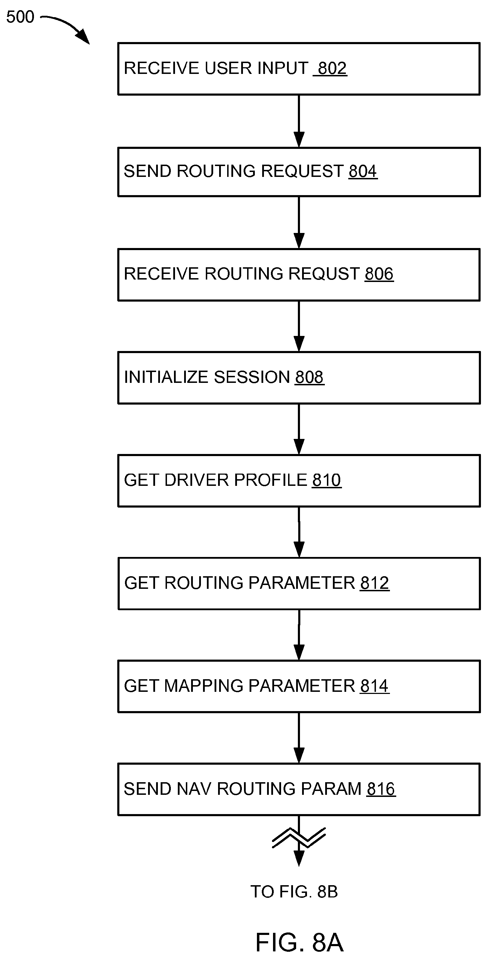

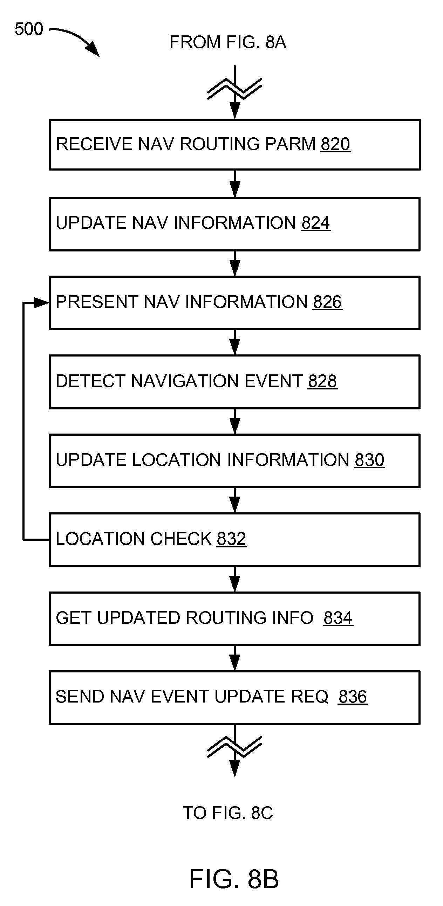

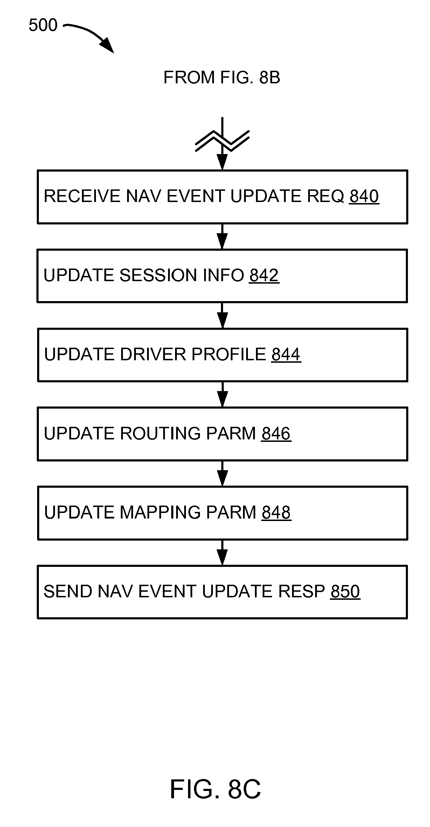

Referring now to FIGs. 8A, 8B and 8C, therein are shown parts of a flow chart for operating the navigation system 500 of FIG. 5. The flow chart can be included in the software 609 of FIG. 6, the server software 643 of FIG. 6, or a combination thereof.

The navigation system 500 can calculate a customized route for a particular driver to a target location and operate the multimedia display interface 604 of FIG. 6 of the first device 502 of FIG. 6 by presenting navigation routing directions and mapping information. In the flow chart, each block is indicated by a number and successively high block numbers follow one another unless explicitly indicated.

FIG. 8A, the first device 502 can receive the navigation routing request to the target location with a user input 620 of FIG. 6 through the client user interface 602 of FIG. 6 in a receive user input block 802.

Next, the first device 502 of FIG. 5 can initialize the routing request parameter 701 of FIG. 7 in a send routing request block 804. The send routing request block 804 can send the routing request parameter 701 with the server request 630 of FIG. 6 to the second device 506 of FIG. 5 over the communication path 504 of FIG. 5.

Next, the second device 506 can receive the routing request parameter 701 with the server request 630 with the server communication unit 640 of FIG. 6 in a receive routing request block 806. The second device 506 can initialize a navigation session and can create the navigation routing parameter 704 of FIG. 7 in an initialize session block 808.

Next, using the driver ID provided by the routing request parameter 701, the second device 506 can retrieve the driver profile 662 of FIG. 6 from the profile engine 644 of FIG. 6 in a get driver profile block 810. The second device 506 can process the driver profile 662 to update the navigation routing parameter 704.

Next, using the driver profile 662, the second device 506 can calculate the route parameter 664 in a get routing parameter block 812. The second device 506 can process the route parameter 664 to update the navigation routing parameter 704.

For example, the routing engine 646 can process the driver proficiency parameter 668 FIG. 6 of the driver profile 662 to calculate the appropriate route. If the driver proficiency rating indicates a preference to avoid heavily congested routes, then the routing engine 646 will calculate the route to avoid highly congested areas.

Next, using the route parameter 664, the second device 506 can retrieve the mapping parameter 666 from the mapping engine 648 of FIG. 6 in a get mapping parameter block 814. The second device 506 can process the mapping parameter 666 to update the navigation routing parameter 704 and the navigation routing data parameter 708. Next, the second device 506 can send the navigation routing parameter 704 from the get mapping parameter block 814 with the server response 632 of FIG. 6 to the first device 502 in a send navigation routing parameter block 816.

FIG 8B, the first device 502 of FIG. 5 can receive the navigation routing parameter 704 with the server response 632 of FIG. 6 from the second device 506 of FIG. 5 via the communication path 504 in a receive navigation routing parameter block 820. The first device 502 can update the navigation session data using the navigation routing parameter 704 of FIG. 7 in an update navigation information block 824.

Next, the first device 502 can present the navigation routing data parameter 708 on the multimedia display interface 604 of FIG. 6 of the client user interface 602 of FIG. 6 using the navigation routing control parameter 706 in a present navigation information block 826. For example, the mapping parameter 666 of FIG. 6 can include display tiles which can be displayed on the multimedia display interface 604. In a further example, the route parameter 664 of FIG. 6 can include the primary route which can be used to generate audio commands on the multimedia display interface 604 to indicate when to make a turn.

Next, the first device 502 can detect the navigation event 607 of FIG. 6 in a detect navigation event block 828. If the navigation event 607 has not been detected by the client location unit 606 of FIG. 6, then the first device 502 can wait until the navigation event 607 occurs.

When the navigation event 607 is detected, the first device 502 can update the current location parameter of the first device 502 in an update location information block 830. The current location parameter is stored in the client local storage 610.

Next, the first device 502 can process the updated location and determine if the first device 502 is on the primary route of the route parameter 664 in a location check block 832. If the first device 502 is on the primary route of the route parameter 664, then control can pass to the present navigation information block 826 to update the multimedia display interface 604. If the first device 502 is not on the primary route of the route parameter 664, then the first device 502 can pass control to a get updated routing information block 834.

The first device 502 can process the navigation event 607 of FIG. 6 and the navigation routing parameter 704 to create the navigation event update request 712 of FIG. 7 to update the navigation session in the get updated routing information block 834. The first device 502 can send the navigation event update request 712 with the navigation event update parameter 714 to the second device 506 via the communication path 504 in a send navigation event update request block 836.

FIG. 8C, the second device 506 of FIG. 5 can receive the navigation event update parameter 714 of FIG. 7 in a receive navigation event update request block 840. The second device 506 can update the session information using the navigation event update parameter 714 in an update session information block 842.

Next, the profile engine 644 of FIG. 6 of the second device 506 can update the driver profile 662 of FIG. 6 with the navigation event control parameter 716 of FIG. 7 of the navigation event update parameter 714 in an update driver profile block 844. The driver profile 662 can be updated to register the navigation event 607 of FIG. 6. For example, if the navigation event 607 represents a missed left turn, the update to the driver profile 662 can update the driver proficiency parameter 668 to indicate an increased tendency to miss left turns.

Next, using the driver profile 662 from the update driver profile block 844, the routing engine 646 of FIG. 6 of the second device 506 calculates the update to the route parameter 664 in an update routing parameter block 846. The route parameter 664 defines the new route between the current location and the target destination based on the driver profile 662. The navigation event update parameter 714 can be updated with the route parameter 664.

The routing engine 646 processes the driver proficiency parameter 668 of the driver profile 662 to calculate the route to the target location. If the driver proficiency parameter 668 indicates a tendency to avoid freeways, the routing engine 646 can calculate a new route that freeways.

Next, using the route parameter 664 from the update routing parameter block 846, the mapping engine 648 of FIG. 6 of the second device 506 can retrieve the mapping parameter 666 of FIG. 6 in an update mapping parameter block 848. The navigation event update parameter 714 can be updated with the mapping parameter 666. For example, the mapping parameter 666 can include updates of mapping images tiles for the new portions of the route identified in the route parameter 664.

Next, the second device 506 can send the navigation event update parameter 714 to the first device 502 via the communication path 504 in a send navigation event update response block 850. The control can pass to the update navigation information block 824 of FIG. 8B. The first device 502 can continue to process navigation event updates until the navigation session ends.

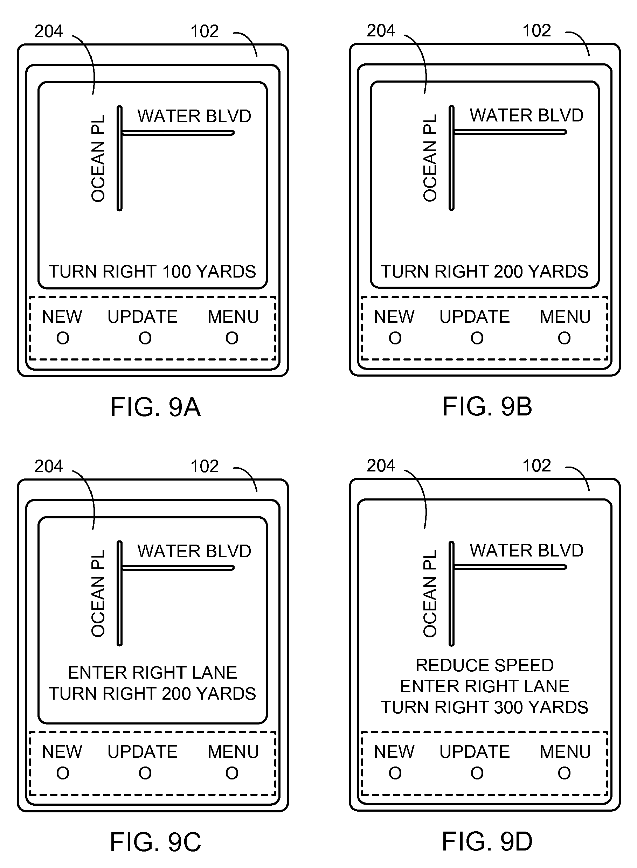

Referring now to FIGs. 9A, 9B, 9C and 9D, therein are illustrations of a first example of the dynamic adaptive navigation routing by the device 102 of the navigation system 100 of FIG. 1. FIG. 9A displays a street map on the multimedia display interface 204. For a driver with the driver proficiency parameter 268 of FIG. 2 above a first predefined threshold, the device 102 displays a navigation command to turn right on the multimedia display interface 204 when the device 102 is one hundred yards away from the intersection. The first predefined threshold is an example of the predefined threshold 320 of FIG. 3.

It is understood that there are several scenarios where the device 102 presents the multimedia content of the specified navigation command on the multimedia display interface 204, wherein the navigation command can include any of several different multimedia data types including video, audio, images, text, other multimedia content, or any combination thereof.

FIG. 9B shows the approach to an intersection for a driver with the driver proficiency parameter 268 below a second predefined threshold. Both the first predefined threshold and the second predefined threshold are samples of the predefined threshold 320 of FIG. 3. The device 102 displays a navigation command to turn right on the multimedia display interface 204 and gives an audible navigation command to turn right when then client is two hundred yards away from the intersection. The second predefined threshold differs from the first predefined threshold requiring the turn notification earlier than turn notification with first predefined threshold.

FIG. 9C shows the approach to an intersection for a driver with the driver proficiency parameter 268, lower than the first predefined threshold and the second predefined threshold, traveling in the left lane before an upcoming right turn. The device 102 displays a navigation command to enter the right lane on the multimedia display interface 204 and gives an audible navigation command when the device 102 is two hundred yards away from the intersection.

FIG. 9D shows the approach to an intersection for a driver with the driver proficiency parameter 268, lower than that described in FIG. 9A to FIG. 9C, traveling at a high speed in the left lane before an upcoming right turn. The device 102 displays navigation commands to reduce speed and to enter the right lane on the multimedia display interface 204 and gives an audible navigation command when the device 102 is three hundred yards away from the intersection.

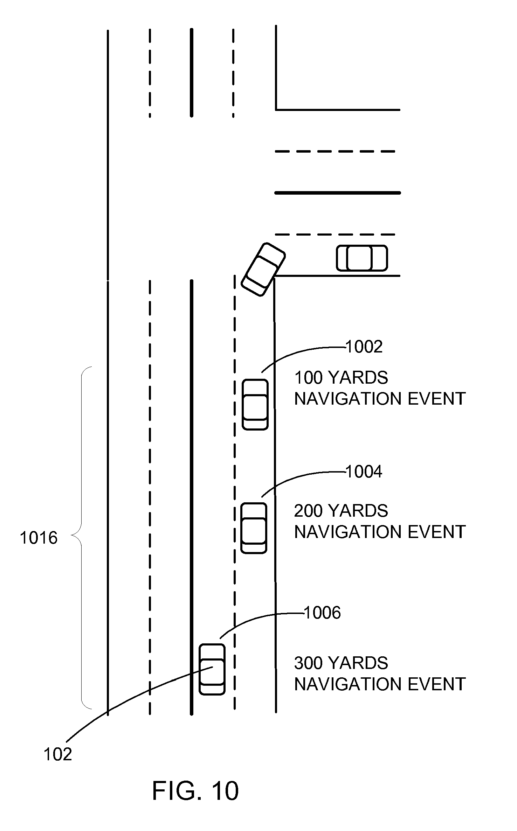

Referring now to FIG. 10, therein is shown an illustration of a second example of a dynamic routing of the navigation system 100 of FIG. 1. FIG. 10 shows a street diagram of a vehicle equipped with the device 102 of the navigation system 100 having dynamic adaptive routing.

At a first location 1002, a driver with the driver proficiency parameter 268 of FIG. 2 above the first predefined threshold receives a navigation command to turn right on the multimedia display interface 204 of FIG. 2 when a vehicle having the device 102 of FIG. 1 is one hundred yards away from the intersection. The navigation event 207 of FIG. 2 can be created when the vehicle is one hundred yards from the intersection.

At a second location 1004, a driver with the driver proficiency parameter 268 below a second predefined threshold receives a navigation command to turn right on the multimedia display interface 204 when the vehicle is two hundred yards away from the intersection. The navigation event 207 can be created when the vehicle is two hundred yards from the intersection.

At a third location 1006, a driver with the driver proficiency parameter 268 below a third predefined threshold traveling in the left hand lane receives a navigation command to enter the right lane and turn right on the multimedia display interface 204 when the vehicle is three hundred yards away from the intersection. The navigation event 207 of FIG. 3 can be created when the vehicle is three hundred yards from the intersection.

At the third location 1006, a driver with the driver proficiency parameter 268 below a fourth predefined threshold traveling at high speed in the left hand lane receives a navigation command to reduce speed, enter the right lane and turn right on the multimedia display interface 204 when the vehicle is three hundred yards away from the intersection. The navigation event 207 can be created when the vehicle is three hundred yards from the intersection and when traveling at a high speed and driving in the left hand lane.

The increased in distance for the right turn can represent the profile engine 244 of FIG. 2 learning a driving tendency 1016 of a driver or operator of the device 102. The driving tendency 1016 is defined as behavior tendencies detected by the navigation system 100.

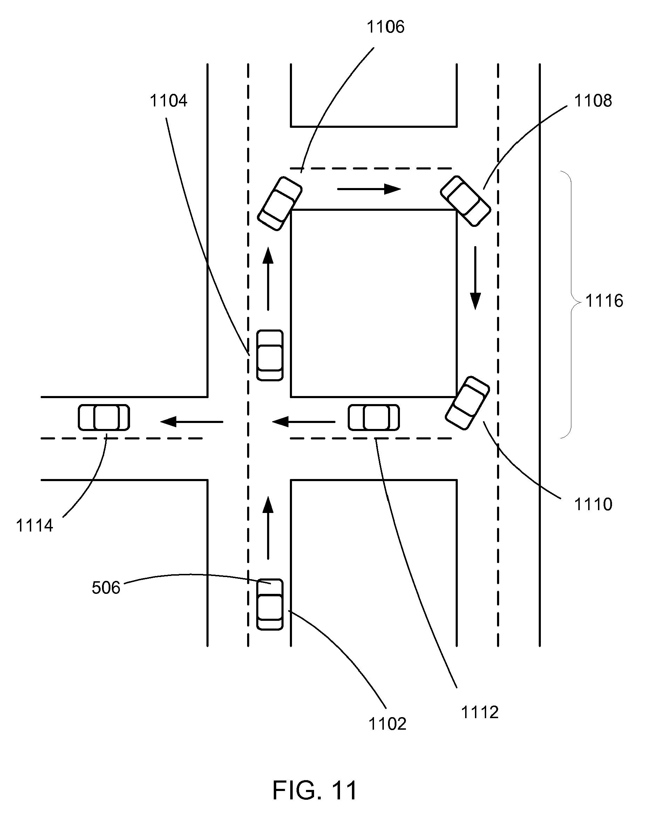

Referring now to FIG. 11, therein is shown an illustration of a first example of a dynamic adaptive routing of the navigation system 500 of FIG. 5. FIG. 11 displays a street diagram of a vehicle with a two device embodiment of the navigation system 500 having dynamic adaptive routing of FIG. 5. At a first location 1102, a vehicle with a driver with a low proficiency rating receives a navigation command to turn left on the multimedia display interface 604 of FIG. 6 when the first device 502 of FIG. 5 is one hundred yards away from the intersection.

At a second location 1104, the driver misses the left turn and triggers the navigation event 607 of FIG. 6. The first device 502 detects the navigation event 607 and sends the second device 506, such as an automobile, the navigation event update parameter 714 of FIG. 7.

The second device 506 will update the driver proficiency parameter 668 of FIG. 6 in the driver profile 662 with a lower value to indicate that a missed left turn has occurred. If the driver proficiency parameter 668 is below the predefined threshold 720 of FIG. 7, the second device 506 can adapt to the driver profile 662 and generate or update the route parameter 664 of FIG. 6 that avoids or minimizes left turns.

The second device 506 can send the update of the navigation event update parameter 714 of FIG. 7 to the first device 502. The first device 502 can then display the navigation event update parameter 714 on the multimedia display interface 604 of the FIG. 6.

At a third location 1106, a fourth location 1108, a fifth location 1110, and a sixth location 1112, the first device 502 provides navigation commands to the driver to make three right turns and then continue straight through the intersection. The lower driver proficiency results in a simpler navigation routing that reduces the number of left hand turns. At a seventh location 1114, the first device 502 continues navigation routing using the driver proficiency parameter 668 updated by the navigation system 500.

The reduction of left turns can represent the profile engine 644 of FIG. 6 learning a driving tendency 1116 of a driver or operator of the second device 506. The driving tendency 1116 is defined as behavior tendencies detected by the navigation system 500.

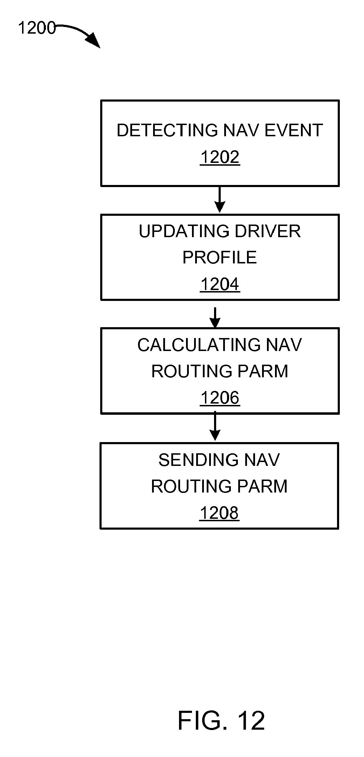

Referring now to FIG. 12, therein is shown a flow chart of a method 1200 of operation of a navigation system 100 having dynamic adaptive routing in a further embodiment of the present invention. The method 1200 includes detecting a navigation event in a block 1202; updating a driver profile with the navigation event in a block 1204; calculating a navigation routing parameter with the driver profile in a block 1206; and sending the navigation routing parameter for displaying on a multimedia display interface of a device in a block 1208.

Yet another important aspect of the present invention is that it valuably supports and services the historical trend of reducing costs, simplifying systems, and increasing performance. These and other valuable aspects of the present invention consequently further the state of the technology to at least the next level.

Thus, it has been discovered that the navigation system having dynamic adaptive routing of the present invention furnishes important and heretofore unknown and unavailable solutions, capabilities, and functional aspects for improving performance, increasing reliability, increasing safety and reducing cost of using a mobile client having location based services capability. The resulting processes and configurations are straightforward, cost-effective, uncomplicated, highly versatile, accurate, sensitive, and effective, and can be implemented by adapting known components for ready, efficient, and economical manufacturing, application, and utilization.

While the invention has been described in conjunction with a specific best mode, it is to be understood that many alternatives, modifications, and variations can be apparent to those skilled in the art in light of the aforegoing description. Accordingly, it is intended to embrace all such alternatives, modifications, and variations that fall within the scope of the included claims. All matters hithertofore set forth herein or shown in the accompanying drawings are to be interpreted in an illustrative and non-limiting sense.

## Claims

1. A method of operation of a navigation system (100) comprising:
calculating a route parameter (264) based on a driver proficiency parameter (268), wherein the route parameter (264) describes a route between two or more locations and the driver proficiency parameter (268) is included in a driver profile (424); and
sending a navigation routing parameter (304) which includes the route parameter (264) for displaying on a multimedia display interface (204) of a device;
the method **characterized by**
detecting a navigation event (207) representing a missed turn of the route;
updating the driver proficiency parameter (268) with the navigation event (207); and
determining if the driver proficiency parameter is below or above a predefined threshold (320) and updating the route parameter (264) such that it avoids or minimizes either left or right turns if the driver proficiency parameter is below the predefined threshold.

2. The method as claimed in claim 1 wherein updating the driver profile (424) includes learning a driving tendency from the navigation event (207).

3. The method as claimed in claim 1 further comprising:
retrieving a mapping parameter (266) based on the navigation event (207); and
updating the navigation routing parameter (304) with the mapping parameter (266).

4. The method of one of the preceding claims wherein the driver profile (262) further comprises one of: a driver location history, a driver vehicle history, a driver traffic parameter, a driver environmental history, a driver preferences parameter, or any combination thereof.

5. The method of one of the preceding claims wherein the driver proficiency parameter (268) is implemented as an enumerated value, such as beginner, normal, advance or expert; a data structure with several individual skill elements; or a numerical rating, or any combination thereof.

6. The method of claim 3, wherein the mapping parameter (266) includes one of: location-specific mapping information, graphical display information, resolution and size-specific display tiles, vector maps, images, points of interest, or any combination thereof.

7. The method of claim 1, wherein the predefined threshold is defined as one of: the number of instances of the navigation event (207), the time between occurrences of the navigation event (207), the distance between occurrences of the navigation event (207), or any combination thereof.

8. The method of one of the preceding claims, wherein the navigation system (100) provides customization by presenting navigation routing directions and mapping information.

9. A navigation system (100) comprising:
a routing engine (246), configured for: calculating a route parameter (264) based on a driver proficiency parameter (268), wherein the route parameter (264) describes a route between two or more locations and the driver proficiency parameter (268) is included in a driver profile (424);
a communication unit (212), configured for sending a navigation routing parameter (264) which includes the route parameter (264) for displaying on a multimedia display interface (204) of a device;
**characterized by**
a location unit (206) for detecting a navigation event (207) representing a missed turn of the route;
wherein the routing engine (246) further is configured for updating the driver proficiency parameter (268) with the navigation event (207), and for determining if the driver proficiency parameter is below or above a predefined threshold (320) and updating the route parameter (264) such that it avoids or minimizes either left or right turns if the driver proficiency parameter is below the predefined threshold.

10. The system as claimed in claim 9 further comprising a profile engine (244) configured for learning a driving tendency from the navigation event (207).

11. The system as claimed in claim 10 further comprising:
a mapping engine (248), coupled to the profile engine (244), configured for retrieving a mapping parameter (266) based on the navigation event (207); and
wherein:
the profile engine (244) is configured for updating the navigation routing parameter (304) with the mapping parameter (266).

## Patentansprüche

1. Verfahren zum Betreiben eines Navigationssystems (100) mit den Verfahrensschritten:
Berechnen eines Routenparameters (264) gestützt auf einen Fahrerbefähigungsparameter (268),
wobei der Routenparameter (264) eine Route zwischen zwei oder mehr Positionen beschreibt und der Fahrerbefähigungsparameter (268) in einem Fahrerprofil (424) enthalten ist; und
Senden eines Navigationsroutenparameters (304), der den Routenparameter (264) enthält, zur Anzeige auf einer Multimedia-Anzeigeschnittstelle (204) eines Gerätes;
**gekennzeichnet durch**:
Erfassen eines Navigationsereignisses (207), das eine verpasste Abzweigung der Route repräsentiert;
Aktualisieren des Fahrerbefähigungsparameters (268) mit dem Navigationsereignis (207); und
Ermitteln, ob der Fahrerbefähigungsparameter unter oder über einem definierten Schwellwert (320) liegt, und Aktualisieren des Routenparameters (264), so dass dieser entweder Abzweigungen nach links oder rechts vermeidet oder minimiert, wenn der Fahrerbefähigungsparameter unter dem definierten Schwellwert liegt.

2. Verfahren nach Anspruch 1, wobei das Aktualisieren des Fahrerprofils (464) das Lernen einer Fahrtendenz aus dem Navigationsereignis (207) umfasst.

3. Verfahren nach Anspruch 1, mit den weiteren Schritten:
Abrufen eines Abbildungsparameters (266) gestützt auf das Navigationsereignis (207); und
Aktualisieren des Navigationsroutenparameters (304) mit dem Abbildungsparameter (266).

4. Verfahren nach einem der vorangehenden Ansprüche, wobei das Fahrerprofil (262) ferner eines der Folgenden umfasst:
eine Fahrerpositionshistorie, eine Fahrerfahrzeughistorie, einen Fahrerverkehrsparameter, eine Fahrerumgebungshistorie, einen Fahrerpräferenzparameter oder Kombinationen hiervon.

5. Verfahren nach einem der vorangehenden Ansprüche, wobei der Fahrerbefähigungsparameter (268) als ein Zahlenwert realisiert ist, wie Anfänger, Normal, Fortgeschritten oder Experte; als eine Datenstruktur mit mehreren einzelnen Fähigkeitselementen; oder als eine numerische Bewertung oder Kombinationen hiervon.

6. Verfahren nach Anspruch 3, wobei der Abbildungsparameter (266) eines der Folgenden umfasst: ortspezifische Abbildungsinformation, graphische Anzeigeinformation, auflösungs- und größenspezifische Anzeigekacheln, Vektorabbildungen, Bilder, Punkte von Interesse oder Kombinationen hiervon.

7. Verfahren nach Anspruch 1, wobei der definierte Schwellwert als eines der Folgenden definiert ist: die Häufigkeit des Navigationsereignisses (207), die Zeit zwischen den Navigationsereignissen (207), die Distanz zwischen den Navigationsereignissen (207) oder Kombinationen hiervon.

8. Verfahren nach einem der vorangehenden Ansprüche, wobei das Navigationssystem (100) eine kundenspezifische Konfiguration durch Darstellen von Informationen bezüglich der Richtung und Abbildung von Navigationsrouten vorsieht.

9. Navigationssystem (100), mit folgenden Merkmalen:
eine Routenentwicklungsmaschine (206), die dazu konfiguriert ist: einen Routenparameter (264) auf der Basis eines Fahrerbefähigungsparameters (268) zu berechnen, wobei der Routenparameter (264) eine Route zwischen zwei oder mehr Positionen beschreibt und der Fahrerbefähigungsparameter (268) in einem Fahrerprofil (424) enthalten ist;
eine Kommunikationseinheit (212), die dazu konfiguriert ist, einen Navigationsroutenparameter (264) zu senden, der den Routenparameter (264) enthält, um diesen auf einer Multimedia-Anzeigeschnittstelle (204) eines Gerätes anzuzeigen;
**gekennzeichnet durch**:
eine Lokalisierungseinheit (206) zum Erfassen eines Navigationselementes (207), das eine verpasste Abzweigung der Route repräsentiert;
wobei die Routenentwicklungsmaschine (246) ferner dazu konfiguriert ist, den Fahrerbefähigungsparameters (268) mit dem Navigationselement (207) zu aktualisieren; und um zu ermitteln, ob der Fahrerbefähigungsparameter unter oder über einem definierten Schwellwert (320) liegt, und den Routenparameter (264) zu aktualisieren, so dass dieser Abzweigungen entweder nach links oder rechts vermeidet oder minimiert, wenn der Fahrerbefähigungsparameter unter dem definierten Schwellwert liegt.

10. System nach Anspruch 9, mit ferner einer Profilentwicklungsmaschine (244), die dazu konfiguriert ist, aus dem Navigationsereignis (207) eine Fahrtendenz zu lernen.

11. System nach Anspruch 10, mit ferner:
einer Abbildungsmaschine (268), die mit der Profilentwicklungsmaschine (244) gekoppelt und dazu konfiguriert ist, einen Abbildungsparameter (266) auf der Grundlage des Navigationselementes (207) aufzufinden; wobei
die Profilentwicklungsmaschine (244) dazu konfiguriert ist, den Navigationsroutenparameter (304) mit dem Abbildungsparameter (266) zu aktualisieren.

## Revendications

1. Procédé d'exploitation d'un système de navigation (100), comprenant les étapes ci-dessous consistant à :
calculer un paramètre d'itinéraire (264) sur la base d'un paramètre d'aptitude du conducteur (268), dans lequel le paramètre d'itinéraire (264) décrit un itinéraire entre deux emplacements ou plus et le paramètre d'aptitude du conducteur (268) est inclus dans un profil de conducteur (424) ; et
envoyer un paramètre de calcul d'itinéraire de navigation (304) qui inclut le paramètre d'itinéraire (264) à afficher sur une interface d'affichage multimédia (204) d'un dispositif ;
le procédé étant **caractérisé par** les étapes ci-dessous consistant à :
détecter un événement de navigation (207) représentant un changement de direction manqué de l'itinéraire ;
mettre à jour le paramètre d'aptitude du conducteur (268) avec l'événement de navigation (207) ; et
déterminer si le paramètre d'aptitude du conducteur est inférieur ou supérieur à un seuil prédéfini (320) et mettre à jour le paramètre d'itinéraire (264) de sorte qu'il évite ou minimise les changements de direction vers la gauche ou vers la droite si le paramètre d'aptitude du conducteur est inférieur au seuil prédéfini.

2. Procédé selon la revendication 1, dans lequel l'étape de mise à jour du profil de conducteur (424) inclut l'étape d'apprentissage d'une tendance de conduite à partir de l'événement de navigation (207).

3. Procédé selon la revendication 1, comprenant en outre les étapes ci-dessous consistant à :
récupérer un paramètre de cartographie (266) sur la base de l'événement de navigation (207) ; et
mettre à jour le paramètre de calcul d'itinéraire de navigation (304) avec le paramètre de cartographie (266).

4. Procédé selon l'une quelconque des revendications précédentes, dans lequel le profil de conducteur (262) comprend en outre l'un parmi : un historique des emplacements du conducteur, un historique des véhicules du conducteur, un paramètre de trafic du conducteur, un historique environnemental du conducteur, un paramètre des performances du conducteur, ou leurs combinaisons quelconques.

5. Procédé selon l'une quelconque des revendications précédentes, dans lequel le paramètre d'aptitude du conducteur (268) est mis en oeuvre sous la forme d'une valeur de type énumératif, par exemple « débutant », « ordinaire », « confirmé » ou « expert » ; d'une structure de données dotée de plusieurs éléments de compétences individuelles ; ou d'un classement numérique, ou de leurs combinaisons quelconques.

6. Procédé selon la revendication 3, dans lequel le paramètre de cartographie (266) inclut l'un des éléments parmi : des informations de cartographie spécifiques à l'emplacement, des informations d'affichage graphique, des tuiles d'affichage spécifiques à la taille et à la résolution, des cartes vectorielles, des images, des points d'intérêt, ou leurs combinaisons quelconques.

7. Procédé selon la revendication 1, dans lequel le seuil prédéfini est défini en tant que l'un parmi : le nombre d'instances de l'événement de navigation (207), la durée entre des occurrences de l'événement de navigation (207), la distance entre des occurrences de l'événement de navigation (207), ou leurs combinaisons quelconques.

8. Procédé selon l'une quelconque des revendications précédentes, dans lequel le système de navigation (100) fournit une personnalisation en présentant des directions de calcul d'itinéraire de navigation et des informations de cartographie.

9. Système de navigation (100), comprenant :
un moteur de calcul d'itinéraire (246) configuré de manière à : calculer un paramètre d'itinéraire (264) sur la base d'un paramètre d'aptitude du conducteur (268), dans lequel le paramètre d'itinéraire (264) décrit un itinéraire entre deux emplacements ou plus et le paramètre d'aptitude du conducteur (268) est inclus dans un profil de conducteur (424) ;
une unité de communication (212) configurée de manière à envoyer un paramètre de calcul d'itinéraire de navigation (264) qui inclut le paramètre d'itinéraire (264) à afficher sur une interface d'affichage multimédia (204) d'un dispositif ;
**caractérisé par** :
une unité de localisation (206) destinée à détecter un événement de navigation (207) représentant un changement de direction manqué de l'itinéraire ;
dans lequel le moteur de calcul d'itinéraire (246) est en outre configuré de manière à mettre à jour le paramètre d'aptitude du conducteur (268) avec l'événement de navigation (207) ; et à déterminer si le paramètre d'aptitude du conducteur est inférieur ou supérieur à un seuil prédéfini (320) et mettre à jour le paramètre d'itinéraire (264) de sorte qu'il évite ou minimise les changements de direction vers la gauche ou vers la droite si le paramètre d'aptitude du conducteur est inférieur au seuil prédéfini.

10. Système selon la revendication 9 comprenant en outre un moteur de profil (244) configuré de manière à apprendre une tendance de conduite à partir de l'événement de navigation (207).

11. Système selon la revendication 10, comprenant en outre :
un moteur de cartographie (248), couplé au moteur de profil (244), configuré de manière à récupérer un paramètre de cartographie (266) sur la base de l'événement de navigation (207) ; et
dans lequel :
le moteur de profil (244) est configuré de manière à mettre à jour le paramètre de calcul d'itinéraire de navigation (304) avec le paramètre de cartographie (266).
